Europäisches Patentamt

European Patent Office

Office européen des brevets

(19)

(11) **EP 0 790 198 A2**

(12) **EUROPÄISCHE PATENTANMELDUNG**

(43) Veröffentlichungstag:
20.08.1997 Patentblatt 1997/34

(51) Int. Cl.⁶: **B65G 27/32**

(21) Anmeldenummer: 97102474.0

(22) Anmeldetag: 15.02.1997

(84) Benannte Vertragsstaaten:
AT BE CH DE DK ES FI FR GB GR IE IT LI LU MC NL PT SE
Benannte Erstreckungsstaaten:

(30) Priorität: 24.02.1996 DE 19606971
16.02.1996 DE 19605789

(71) Anmelder: AEG Vibrationstechnik GmbH
60528 Frankfurt (DE)

(72) Erfinder:
• Sting, Martin, Dr.-Ing.
60323 Frankfurt (DE)
• Spruner von Mertz, Gert, Dipl.-Ing.
60594 Frankfurt (DE)

(74) Vertreter: Stoffregen, Hans-Herbert, Dr. Dipl.-Phys.
Patentanwalt
Postfach 21 44
63411 Hanau (DE)

(54) **Verfahren und Vorrichtung zum Betreiben eines Resonanzschwingungssystems**

(57) Beim Betrieb eines Resonanzschwingungssystems mit zwei gegeneinander schwingenden Massen ist ein Aufeinanderschlagen der Massen durch eine Regelung zu verhindern. Insbesondere bei Verwendung eines Magnetantriebs wird zusätzlich angestrebt, den Luftspalt möglichst klein zu halten.

Zusätzliche Schwierigkeiten treten auf, wenn eine der Hauptmassen während des Betriebs (beispielsweise durch Zuladung von Fördergut) ihr Gewicht in unvorhersehbare Weise ändert. Erfindungsgemäß wird eine "ablösende Regelung" vorgeschlagen, bei der ab einem vorgebbaren Wert für Gesamtschwingbreitenregelung erfolgt.

Dazu ist einem einzelnen Regler (9) eine Vergleichseinrichtung (12) vorgeschaltet, die nur einen (gewichteten) Maximalwert von jeweils zwei erfassten Istgrößen für den Vergleich mit einem vorgegebenen Sollwert (w) weiterleitet.

Fig. 2

## Beschreibung

Die Erfindung bezieht sich auf ein Verfahren zum Betreiben eines Resonanzschwingungssystems mit einer ersten Hauptmasse und dieser gegenüber schwingfähig angebrachten, während des Betriebes nicht unbedingt ein gleichbleibendes Gewicht aufweisenden zweiten Hauptmasse und mit einer von einer Stellgröße beeinflussten elektrischen Antriebseinrichtung zur Erzeugung von Schwingungsbewegungen. Ferner bezieht sich die Erfindung auf eine Vorrichtung mit einem Resonanzschwingungssystem mit einer ersten Hauptmasse und einer dieser gegenüber schwingfähig angebrachten, während des Betriebes nicht unbedingt ein gleichbleibendes Gewicht aufweisenden zweiten Hauptmasse und mit einer von einer Stellgröße beeinflussten elektrischen Antriebseinrichtung zur Erzeugung der Schwingungsbewegungen.

Ein Resonanzschwingungssystem der vorstehend beschriebenen Art ist aus der Firmendruckschrift Krause, Reinhard: Grundbegriffe der Schwingfördertechnik,v/B.8.08./1771, AEG-Telefunken, Fachbereich Vibrationstechnik,Goldsteinstraße 238, Frankfurt am Main bekannt. Bei dieser Firmendruckschrift handelt es sich um einen Sonderdruck aus der "CHEMIKER-ZEITUNG", 95(1971)8, Seiten 364-372. Eine Regelung des Schwingungsverhaltens wird nicht erwähnt.

Aus der DE 29 35 739 A1 ist ein Verfahren und eine Vorrichtung zur Steuerung einer Resonanzschwingrinne mit einer Arbeitsmasse und einer Resonanzmasse bekannt, die durch eine rotierende Unwucht, insbesondere durch einen Unwuchtmotor, in Schwingung versetzt werden, wobei die Schwingweite in der Arbeitsmasse konstant gehalten wird.

In der CH 666 359 A5 ist eine Vorrichtung zur Steuerung von magnetisch angetriebenen Massenschwingsystemen beschrieben. Die Vorrichtung weist einen Elektromagneten auf, mit dem das System auf eine gewünschte Schwingungsamplitude einstellbar ist.

Die GB 2 213 293 A bezieht sich auf eine elektronische Ansteuerung für einen Schwingungserzeuger. Die Schaltung erzeugt Signale zur Ansteuerung einer induktiven Last wie z.B. eines Elektromagneten eines Schwingungserzeugers. Dabei wird ebenfalls auf eine konstante Schwingweite geregelt.

In der GB 2 030 731 A ist ein Schwingungsförderer beschrieben. Der Antrieb ist ebenfalls als Elektromagnet ausgebildet, wobei über einen elektrischen Schaltkreis eine konstante Schwingweite geregelt wird. Es ist vorgesehen, daß hierzu entweder die wirklich gemessene Schwingweite oder eine zur Schwingweite proportionale Größe wie die Spannung oder den Strom durch den Elektromagneten zu verwenden.

Durch die bekannten Maßnahmen kann ein Überschreiten eines Maximalwertes für die Summe der Schwingweiten der Massen nicht verhindert.

Aus der DE 38 13 387 ist ein Resonanzschwingungssystem bekannt, das eine Rgeleinrichtung hat, mit der die Gesamtschwingweite bzw. -breite der gegeneinander schwingenden Massen im Betriebsbereich zwischen unbeladenem Zustand und dem Zustand bei maximaler Fördergutbelastung an einer der beiden Massen konstant gehalten wird.

Das bekannte Resonanzschwingungssystem, das als Zweimassenschwingsystem ausgebildet ist, hat ein Eigen- bzw. Resonanzfrequenz, die sich mit zunehmender Gesamtmasse der beiden schwingenden Massen zu kleineren Werten verschiebt.

Wenn das Resonanzschwingungssystem in der Fördertechnik angewandt wird, ist beispielsweise eine Schwingrinne Bestandteil der einen schwingenden Mase. Auf einer Schwingrinne wird körniges Fördergut transportiert. Wenn die Menge des Fördergutes erhöht wird, steigt zum einen die Massenankopplung an der Schwingrinne und zum anderen die Dämpfung. Bei vermehrtem körnigen Fördergut wird nämlich die Reibung der Körner untereinander in ihrer Gesamtheit vergrößert und damit eine Erhöhung der Dämpfung hervorgerufen. Die Resonanzkurve des Resonanzschwingungssystems verläuft um so flacher, je größer die Dämpfung ist.

Einerseits ist ein Betrieb des Resonanzschwingungssystems im Resonanzbereich hinsichtlich der Schwingungsamplitude um so kritischer bzw. labiler, je geringer die Dämpfung ist. Andererseits wird eine möglichst geringe Dämpfung angestrebt, um die Verlustleistung gering zu halten. Der Arbeitspunkt wird daher üblicherweise in den unterkritischen oder überkritischen Bereich der Resonanzkurve gelegt.

Bei einem Betrieb im unterkritischen Bereich ist die Eigenfrequenz größer als die Antriebsfrequenz. Mit zunehmender Dämpfung findet eine Verringerung der Schwingungsamplitude statt. Durch die Massenankopplung nähert sich der Arbeitspunkt des Resonanzschwingungssystems dem Resonanzpunkt, der durch den Maximalwert der Schwingungsamplitude gekennzeichnet ist. Zugleich verringert die Massenankopplung die Schwingingsamplitude der Schwingrinne.

Dämpfung und Massenankopplung wirken folglich bezüglich der Schwingungsamplitude einander entgegen, was zu einer Stabilisierung des Betriebs im Sinne einer Kompensation der beiden Effekte ("selbsthelfendes System") führt. Da im Resonanzfall die Schwingung instabil sein kann, wird das bekannte System so eingestellt, dass unter Berücksichtigung aller Einflüsse durch die Belastung der Abstand zur Resonanz so groß ist, dass sich ein stabiler Betrieb ergibt. Um den Einfluß der Ankopplung und Dämpfung durch das Fördergut möglichst gering zu halten, besteht die Möglichkeit, die beiden Hauptmassen des Resonanzschwingungssystems möglichst groß zu wählen. Dadurch wird auch in Resonanznähe eine gute Schwingungsstabilität erzielt. Die hohe Gesamtmase ist allerdings von der Handhabung her und aus Kostengründen unerwünscht.

Die Gesamtschwingbreite eines Resonanzschwingungssystems, bei dem eine Freimasse und eine Arbeitsmasse gegeneinander schwingen, ist die den Systemzustand beschreibende Kenngröße. Es ist zwischen der Gesamtschwingbreite, also der Summe der Schwingbreite der Freimasse und der Schwingbreite der Arbeitsmasse, und der Schwingbreite der Arbeitsmasse - mit dem Nutzgerät, beispielsweise einer Schwingrinne, als Bestandteil - zu unterscheiden.

Die Gesamtschwingbreite als Kenngröße hat den Vorteil, daß sie zur Vermeidung des Anschlagsbetriebs, also dem Aufeinanderschlagen von Freimasse und Arbeitsmasse, herangezogen werden kann. Ein solches Aufeinanderschlagen ist unbedingt zu vermeiden. Dies wird durch die Regelung der Gesamtschwingbreite auf einen konstanten Sollwert erreicht.

Diese Regelungsart hat den Vorteil, daß der Sicherheitsabstand zwischen den schwingenden Hauptmassen zugunsten höherer Magnetzugkraft erheblich reduziert werden kann, d.h. die Eigenfrequenz kann bei einem Schwingfördergerät im Leerlauf so eingestellt werden, daß die Eigenfrequenz bei maximaler Fördergutbelastung gleich der Antriebsfrequenz ist. Bei der Gesamtschwingbreitenregelung ist allerdings der oben beschriebene Vorteil des selbsthelfenden Systems (größere Streckenverstärkung bei zunehmender Beladung) nicht vorhanden. Eine variable Abstimmung der Eigenfrequenz an die jeweiligen Gegebenheiten des Einsatzes des Schwingfördergeräts ist bei der Gesamtschwingbreitenregelung nicht möglich.

Der Erfindung liegt das Problem zugrunde, ein Verfahren zum Betreiben eines Resonanzschwingungssystem mit zwei gegeneinander schwingenden Hauptmassen bereitzustellen, mit dem ein Überschreiten eines Maximalwertes für die Summe der Schwingbreiten beider Hauptmassen verhindert und eine möglichst große und sichere Ausnutzung der vorgegebenen Verbrauchsleistung für die Erzeugung von Schwingungen erreicht wird, selbst dann, wenn während des Betriebes die eine Hauptmasse kein gleichbleibendes Gewicht behält. Ferner ist eine Vorrichtung zur Durchführung eines derartigen Verfahrens anzugehen.

Das Problem wird erfindungsgemäß durch ein Verfahren nach Anspruch 1 und durch eine Vorrichtung nach Anspruch 5 gelöst.

Das Verfahren arbeitet im unterkritischen Betrieb bis die Antriebsfrequenz gleich der Eigenfrequenz ist. Bei dem Verfahren handelt es sich um eine ablösende Regelung: zunächst ist die Betriebsspannung die Regelgröße und bei Überschreiten eines Grenzwertes für die Gesamtschwingbreite wird die Gesamtschwingbreite zur Regelgröße.

Das erfindungsgemäße Verfahren bietet den Vorteil, daß zum einen die Vorzüge eines "selbsthelfenden Systems" vorhanden sind und zugleich trotz Überwachung der Gesamtschwingbreite die eigentliche Nutzgröße, nämlich die Schwingbreite des Nutzgerätes, konstant bleibt.

Im Falle der Anwendung des Verfahrens bei einem Schwingfördergerät mit einem Magnetantrieb tritt im unterkritischen Betrieb zunächst der selbsthelfende Effekt mit konstantem Förderstrom bei unterschiedlicher Beladung mit Schüttgut auf; der Förderstrom ist von Netzspannungsschwankungen und Beladung unabhängig. Bei dieser Betriebsweise (mit einer Regelung der Betriebsspannung) entsteht mit zunehmender Gesamtschwingbreite die Gefahr eines Aufeinanderschlagens der beiden Hauptmassen (Freimasse und Arbeitsmasse).

Zur Vermeidung des Aufeinanderschlagens löst - bei Überschreiten eines Grenzwertes für die Gesamtschwingbreite - eine Gesamtschwingbreitenregelung die Betriebsspannungsregelung ab ("ablösende Regelung"), bevor es zur Gerätezerstörung kommen kann. Somit läßt sich bei bestmöglichem Betriebsverhalten und geringem Sicherheitsabstand zwischen Magnetkern und Anker des Magnetvibrators auskommen, d.h. die Leistung des Schwingfördergeräts wird optimal ausgenutzt. Der Gesamtschwingbreitenwert kann beliebig bis zur Nennschwingbreite des Resonanzschwingungssystems eingestellt werden. Eine Verringerung der Eigenfrequenz führt nun aufgrund der Streckenverstärkung zu einer früheren Ablösung der Regelungsart. Die Schwingbreite kann nicht über den im Nennzustand vorgegebenen Sollwert ansteigen.

Bei einer bevorzugten Ausführungsform werden der Istwert der Stellgröße und der Istwert der Gesamtschwingbreite nach einer Gewichtung wenigstens eines Istwertes miteinander verglichen, wobei der größere Wert als Regelgrößen-Istwert von einem vorgebbaren Sollwert zur Bestimmung der Regelabweichung subtrahiert wird, die einem Regler zugeführt wird.

Durch den Vergleich der beiden erfaßten Werte und durch die Berücksichtigung lediglich des größeren Wertes bei der Regelung wird erreicht, dass bei einem Wechsel von der einen Regelungsart in die andere Regelungsart (Stellgrößenregelung/Gesamtschwingbreitenregelung) kein Sprung bei der Gesamtschwingbreite herbeigeführt wird.

Der Ablösepunkt (für den Wechsel der Betriebsarten) liegt also bei dem Verfahren in Bezug auf das Betriebsverhalten immer an der optimalen Stelle.

Es besteht also die Möglichkeit der Regelung nach zwei Systemgrößen in allen Arbeitspunkten ohne Istwertsprung bei Wechsel der Führungsgröße mit folgenden zusätzlichen Vorteilen:

- Es ist nur ein Regelkreis erforderlich.
- Alle Systemeinstellungen können an einer Gewichtungsstelle vorgenommen werden.
- Für einen Magnetvibrator können hier die heute bekannten Regelungsarten (Betriebsspannungsregelung und Gesamtschwingbreitenregelung) eingestellt werden.

Die erfindungsgemäße "ablösende Regelung" weist im Falle der Anwendung in einem System zum Bewegen/Rütteln von Schüttgut gegenüber den bisherigen Regelungsarten ein verbessertes Betriebsverhalten ("selbsthelfendes System" mit dem Effekt von beladungsunabhängigem Förderstrom) bei gleichzeitig optimaler Ausnutzung der theoretischen Reserven (durch den Anschlagschutz) auf.

In extremen Einsatzfällen besteht gegenüber der reinen Gesamtschwingbreitenregelung die Möglichkeit der variablen Abstimmung der Eigenfrequenz des Resonanzsystems bei gleichzeitiger Anschlagüberwachung. Damit wird die Anpassung an nicht durchschnittliche Bedingungen möglich.

Ein Betrieb ohne einen Aufnehmer für die Gesamtschwingbreite ist ohne eine Einstellungsänderung ebenfalls möglich. Sollte ein Anwender einen solchen Aufnehmer nicht wünschen, beispielsweise bei Anlagen in Übersee, oder sollte der Aufnehmer funktionsunfähig werden, kann die Anlage ohne irgendwelche Anpassungsmaßnahmen weiter betrieben werden.

Da die Gesamtschwingbreite geregelt wird und nicht einfach eine obere Begrenzung darstellt, kann durch Wechsel des Aufnehmers mit demselben Gerät auch ein System zur Regelung der Nutzschwingbreite aufgebaut werden.

Durch Veränderung der Gewichtung der an die Vergleichseinrichtung geführten Werte des Effektivwerts der Betriebsspannung läßt sich der Ablösepunkt, d.h. der Grenzwert für die Gesamtschwingbreite, verschieben.

Dabei verschlechtert sich das Betriebsverhalten wegen des zuvor oben erwähnten Vergleichs der (gewichteten) Istwerte und der Berücksichtigung lediglich des größeren Wertes nicht. Trotz Verschiebung des Ablösepunktes wird kein Sprung bei den Istwerten verursacht.

Das oben beschriebene Verfahren hat zusätzlich den Vorteil, dass bei nicht durchschnittlichen Fördergutbelastungen das Gerät mit einer entsprechend angepassten Abstimmung betrieben werden kann. Das Förderorgan lässt sich somit optimal den jeweiligen Einsatzbedingungen anpassen. So wird bei einer Erhöhung der Eigenfrequenz der Ablösepunkt später erreicht.

Resonanzschwingsysteme mit einem Magnetantrieb können im spannungsgeregelten Betrieb eingesetzt werden. Es wird hierbei der Effektivwert der Betriebsspannung (für den Magnetantrieb) auf einen gleichbleibenden Wert geregelt. Diese Maßnahme schränkt das erwähnte selbsthelfende System in keiner Weise ein: bei einer Zunahme der Arbeitsmasse (z. B. durch Fördergutbeladung im Falle eines Schwingförderers) wird die Regelstreckenverstärkung des Schwingsystems, d.h. die von der Antriebseinrichtung aufgebrachte Wirkung, automatisch angehoben. Dies führt zu einer erhöhten Schwingleistung. Dieser Effekt ist im praktischen Einsatz, beispielsweise bei einer Schwingrinne sehr vorteilhaft, da der Austrag des Schüttgutes von Schwingrinnen somit nahezu von Beladungen unabhängig und damit konstant ist.

Magnetantriebe als Antriebseinrichtungen für Resonanzschwingungssysteme sind sehr empfindlich, was Netzspannungsänderungen betrifft, da diese direkt eine überproportionale Erhöhung oder Erniedrigung der Magnetzugkraft bewirken.

Eine Spannungsregelung gleicht diese Schwankungen aus, indem als Stellgröße - z.B. der Phasenwinkel des Thyristors in einem dem Magnetantrieb vorgeschalteten Stromrichter - mit dem Ziel konstanter Magnetzugkraft korrigiert wird.

Magnetantriebe werden im Werk auf das Fördergerät abgestimmt. Dabei wird die Eigenfrequenz des Resonanzsystems eingestellt. Die Abstimmung am leeren Gerät erfolgt unter Annahme durchschnittlicher Schüttgutbeladungen, die das spätere Systemverhalten beeinflussen.

Dieser Durchschnittswert trifft natürlich nicht immer auf die tatsächlichen Einsatzfälle zu, so dass sowohl eine Überlastung, die zum Anschlag gegeneinander schwingender Teile führt, als auch eine Unterauslastung vorkommen kann. Sind diese Einsatzfälle bekannt, so kann man durch eine Modifizierung der Abstimmung diese Sonderfälle berücksichtigen. Bezogen auf das leere Gerät liegt dann eine andere Schwingbreite als die Nennschwingbreite vor.

Die erfindungsgemäße Vorrichtung kann für die Durchführung des oben beschriebenen Verfahrens eingesetzt werden. Es ist jedoch auch möglich, den Istwertgeber für die Gesamtschwingbreite oder die Erfassungsvorrichtung für den Effektivwert der Betriebsspannung wegzulassen und die Vorrichtung nur im betriebsspannungs- oder nur im gesamtschwingweitengeregelten Betrieb einzusetzen, wenn dies für bestimmte Anwendungsfälle ausreichend ist.

Ausgestaltungen der Erfindung ergeben sich aus den Ansprüchen 2 - 4 bzw. 6 - 9.

Weitere Einzelheiten, Vorteile und Merkmale ergeben sich nicht nur aus den Ansprüchen, den diesen zu entnehmenden Merkmalen - für sich oder in Kombination -, sondern auch aus der nachfolgenden Beschreibung von bevorzugten Ausführungsbeispielen anhand der Zeichnungen.

Es zeigen:

Fig. 1       schematisch ein Resonanzschwingungssystem mit einem Magnetvibratorantrieb,

Fig. 2       ein Blockschaltbild einer Vorrichtung zum Betrieb des Resonanzschwingungssystems und

Fig. 3       ein Diagramm zur Veranschaulichung der Lage des Arbeitspunktes bei zwei verschiedenen Grenzwerten für die Gesamtschwingbreite.

Ein Resonanzschwingungssystem enthält einen Magnetantrieb 1 ("Magnetvibrator") mit einem Anker 2 und einem schwingfähig zu dem Anker 2 angebrachten Magnetkern 3. Der Anker 2 ist mit seinem Gehäuse Bestandteil einer Freimase $m_F$. Über eine Feder 4 (mit einer Federkonstante c) ist an die Freimasse $m_F$ eine Arbeitsmasse $m_A$ gekoppelt. Zur Arbeitsmasse gehört der Magnetkern 3, eine (nicht im einzelnen dargestellte) Förderrinne und Schüttgut 5, welches in der Förderrinne transportiert werden soll. Anker 2 und Magnetkern 3 mit seinem Gehäuse können in der Anordnung auch zueinander ausgetauscht werden.

Die Eigenfrequenz $f_e$ des Schwingfördergeräts ergibt sich nach der Formel

$$f_e = (c/m_R)^{1/2},$$

wobei die resultierende Masse $m_R$ nach der Beziehung

$$m_R = m_F \times m_A / (m_F + m_A)$$

bestimmt wird.

Die Eigenfrequenz $f_e$ kann durch Veränderung der Federkonstante c oder der Freimasse $m_F$ auf gewünschte Wert eingestellt werden. Bei Einstellung im Leerlauf ist dabei die maximale Fördergutbelastung in Betracht zu ziehen.

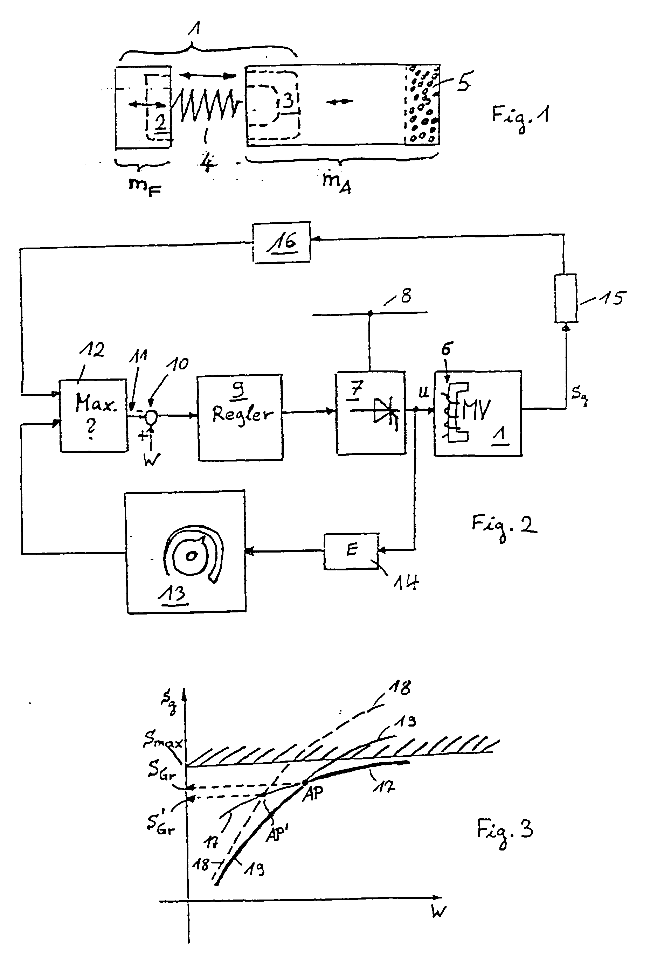

Nach Fig. 2 enthält der Magnetvibrator 1 die Spule 6 des Magneten. Die Spule 6 ist an einen Thyristorsteller 7 angeschlossen, der z. B. als Frequenzumrichter arbeitet, d.h. aus der Netzfrequenz eine für den Betrieb des Schwingfördergeräts gewünschte Antriebsfrequenz erzeugt, die beispielsweise 33 Hz betragen kann. Gespeist wird der Thyristorsteller 7 aus dem Netz 8 mit z. B. 50 Hz.

Mittels des Thyristorstellers 7 wird durch Phasenanschnittsteuerung der Spannung aus dem Netz die Betriebsspannung u des Magnetvibrators 1 verstellt.

Dem Thyristorsteller 7 ist eingangsseitig ein PID-Regler 9 vorgeschaltet, dem von einer Summierstelle 10 die Regelabweichung zugeführt wird. Die Summierstelle 10 wird von einem Sollwert w beaufschlagt. Weiterhin erhält die Summierstelle einen Istwert 11, der von einer Vergleichsanordnung 12 angegeben wird, dem eingangsseitig zwei Istwerte zugeführt werden. Die Vergleichseinrichtung 12 prüft, welcher der eingespeisten Istwerte größer ist und leitet den größeren zur Summierstelle 10 weiter; dort wird der größere Istwert 11 von einem Sollwert w zur Bildung einer Regelabweichung subtrahiert.

Der eine Istwert wird durch Erfassen der Ausgangsspannung des Thyristorstellers 7 erzeugt, d. h. Regelgröße ist in diesem Fall der Effektivwert der Betriebsspannung des Magnetvibrators 1. Die Betriebsspannungswerte werden in einer Einrichtung 13 gewichtet, d. h. mit einem von Hand vorgebbaren Faktor multipliziert, bevor sie der Vergleichseinrichtung 12 zugeführt werden, die analoge Werte verarbeitet. Ein Istwertgeber 15 für die Gesamtschwingbreite bzw. -weite $S_g$ zwischen Magnetkern 3 und Anker 2 des Magnetvibrators 1 ist über eine Abtastschaltung 16 mit dem anderen Eingang der Vergleichsschaltung 12 verbunden.

Das oben beschriebene Schwingfördergerät arbeitet nach folgendem Verfahren:

Das Schwingfördergerät wird durch die Freimasse $m_F$ und die Federkonstante c bei einer bestimmten Antriebsfrequenz $f_A$ für den unterkritischen Betrieb eingestellt. Mittels des Sollwerts w und der Einrichtung 13 wird eine geregelte Betriebsspannung eingestellt, die eine große Gesamtschwingbreite $S_G$ hat, die jedoch nicht zu einem Aufeinanderschlagen von Anker 2 und Magnetkern 3 führt. Die Einstellung kann insbesondere die Nennschwingweite bei einer bestimmten Frequenz, vorzugsweise nahe der Eigenfrequenz $f_e$ sein.

Im betriebsspannungsgeregelten Betrieb arbeitet das Schwingfördergeräüt dann mit automatischer Verstärkung bei zunehmender Fördergutbelastung, so daß eine höhere Schwingungsleistung entsteht. Ab einem durch die Einrichtung 14 einstellbaren Istwert der Betriebsspannung übersteigt der Istwert des Istwertgebers 15 (für die Gesamtschwingungsbreite) den Effektivwert der Betriebsspannung, so daß nunmehr die Spannungsregelung von einer Gesamtschwingweitenregelung abgelöst wird. Diese Gesamtschwingweitenregelung tritt dann an die Stelle der Spannungsregelung, wenn die Eigenfrequenz nahe an der Antriebsfrequenz liegt. Es wird hierdurch ein Anschlagen von Anker 2 und Magnetkern 3 vermieden, obwohl ein Betrieb im Resonanzfall möglich ist.

Das Schwingfördergerät wird somit nach zwei Regelstrategien betrieben. Bis zu einer beliebigen einstellbaren Gesamtschwingbreite, z.B. die Nennschwingbreite wird das Gerät mit der Spannungsregelung betrieben. Bei Überschreiten des Ablösepunktes erfolgt die Führung nicht mehr anhand des Effektivwertes der Betriebsspannung, sondern anhand der Gesamtschwingbreite $S_g$.

Fig. 3 zeigt in einem Diagramm die Abhängigkeit der Gesamtschwingbreite $S_g$ von dem Sollwert w nach Fig. 2, und zwar in Kurve 17 im Falle einer Regelung auf eine konstante Gesamtschwingbreite (Gesamtschwingbreitenregelung) und in den Kurven 18 und 19 für den Fall einer Regelung auf eine gleichbleibende Betriebsspannung (Betriebsspannungsregelung), wobei in den Kurven 18 und 19 zwei verschiedene Gewichtungen für den Effektivwert berücksichtigt sind (die Gewichtungen werden nach Fig. 2 in der Einrichtung 13 eingestellt).

In den Schnittpunkten der Kurve 17 mit den beiden Kurven 18 und 19 liegen die Ablösepunkte AP und AP', an denen der Übergang von der Betriebsspannungsregelung zu der Gesamtschwingbreitenregelung vollzogen wird. Mittels der Vergleichseinrichtung 12 nach Fig. 2 und durch die Berücksichtigung nur des größeren der beiden Eingangswerte bei der Regelung wird stets an dem jeweiligen Ablösepunkt AP bzw. AP' der Wechsel der Regelungsart vollzogen.

Jedem der beiden Ablösepunkte AP und AP' entspricht ein Grenzwert $S_{GR}$ und $S_{GR}$ für die Gesamtschwingbreite $S_g$.

Die Gesamtschwingbreitenregelung nach Kurve 17 sorgt dafür, daß ein bestimmter maximaler Grenzwert $S_{max}$ für die Gesamtschwingbreite $S_g$ nicht überschritten wird; ein Aufeinanderschlagen von Freimasse $m_F$ und Arbeitsmasse $m_A$ wird dadurch verhindert.

## Patentansprüche

1. Verfahren zum Betreiben eines Resonanzschwingungssystems mit einer ersten Hauptmasse ($m_F$) und einer dieser gegenüber schwingfähig angebrachten, während des Betriebes nicht unbedingt ein gleichbleibendes Gewicht aufweisenden zweiten Hauptmasse ($m_A$) und mit einer von einer Stellgröße beeinflussten elektrischen Antriebseinrichtung zur Erzeugung von Schwingungsbewegungen,
wobei zunächst ein Grenzwert ($S_{GR}$) für eine Gesamtschwingbreite ($S_g$) der beiden Hauptmassen ($m_F$, $m_A$) eingestellt wird, anschließend unabhängig vom aktuellen Gewicht der zweiten Hauptmasse ($m_A$) bei Gesamtschwingbreiten ($S_g$) bis zu dem eingestellten Grenzwert ($S_{Gr}$) auf einen gleichbleibenden Wert der Stellgröße geregelt wird und wobei bei Überschreiten des Grenzwertes die Gesamtschwingbreite ($S_g$) auf einen gleichbleibenden Wert geregelt wird.

2. Verfahren nach Anspruch 1,
**dadurch gekennzeichnet**,
dass die Stellgröße und der Istwert der Gesamtschwingbreite ($S_g$) erfasst und nach einer Gewichtung wenigstens eines der beiden Werte miteinander verglichen werden, dass der größere Wert von beiden als Regelgrößen-Istwert von einem vorgegebenen Sollwert (w) subtrahiert wird und dass die daraus gewonnene Regelabweichung einem Regler (9) für die Stellgröße bzw. für die Gesamtschwingbreite ($S_g$) zugeführt wird.

3. Verfahren nach einem der vorangehenden Ansprüche,
**dadurch gekennzeichnet**,
dass die elektrische Antriebseinrichtung ein Magnetantrieb (1) ist und dass die Stellgröße der Effektivwert der den Magnetantrieb (1) speisenden Betriebsspannung ist.

4. Verfahren nach Anspruch 1 oder 2,
**dadurch gekennzeichnet**,
dass die Antriebseinrichtung ein Schubkurbelantrieb mit einem Elektromotor ist und daß die Stellgröße die Frequenz der den Elektromotor speisenden Betriebsspannung ist.

5. Vorrichtung mit einem Resonanzschwingungssystem mit einer esten Hauptmasse ($m_F$) und einer dieser gegenüber schwingfähig angebrachten, während des Betriebes nicht ungedingt ein gleichbleibendes Gewicht aufweisenden zweiten Hauptmasse ($m_A$) und mit einer von einer Stellgröße beeinflussten elektrischen Antriebseinrichtung (6) zur Erzeugung der Schwingungsbewegungen, insbesondere zur Durchführung eines Verfahrens nach Anspruch 1 oder 2,
wobei ein Istwertgeber (15) für die Gesamtschwingbreite ($S_g$) und eine Erfassungsvorrichtung (14) für die Stellgröße an eine Vergleichseinrichtung (12) angeschlossen sind, die den größeren der erfassten Werte zu einer Summierstelle (10) weiterleitet, die mit einem Sollwert (w) eine Regelabweichung bildet, die einen Regler (9) beaufschlagt, dem ein Anschlussgerät (7) nachgeschaltet ist, mit dem die elektrische Antriebseinrichtung (1, 6) verbunden ist.

6. Vorrichtung nach Anspruch 5,
**dadurch gekennzeichnet**,
dass die Werte für die Gesamtschwingbreite ($S_g$) und die Stellgröße in ständiger Wiederholung zunächst digitalisiert und danach verglichen werden.

7. Vorrichtung nach Anspruch 5 oder 6,
**dadurch gekennzeichnet**,
dass das Anschlussgerät ein Thyristorsteller (7), die elektrische Antriebseinrichtung ein Magnetantrieb (1) und die Stellgröße der Effektivwert des den Magnetantrieb (1) speisenden Betriebsstroms ist.

8. Vorrichtung nach Anspruch 5 oder 6,
**dadurch gekennzeichnet**,
dass die elektrische Antriebseinrichtung ein Schubkurbelantrieb mit einem Elektromotor und die Stellgröße die Frequenz der den Elektromotor speisenden Betriebsspannung ist.

9. Verwendung der Vorrichtung nach einem der Ansprüche 5 bis 8 bei einem Vibriergerät, einem Schwingfördergerät oder bei einer Rüttelsiebeinrichtung.

Fig. 1

$m_F$     $m_A$

Fig. 2

Max. ? — 9 Regler — 7 — MV

E

Fig. 3

$S_z$

$S_{max}$

$S_{Gr}$

$S'_{Gr}$

AP

AP'

W